Europäisches Patentamt

(19) European Patent Office    (11) Numéro de publication: **0 061 398**

Office européen des brevets    **B1**

(12)    **FASCICULE DE BREVET EUROPÉEN**

(45) Date de publication du fascicule du brevet:    (51) Int. Cl.⁴: **B 64 D 1/02,** B 63 C 9/22
23.07.86

(21) Numéro de dépôt: **82400496.4**

(22) Date de dépôt: **18.03.82**

(54) **Procédé et dispositifs pour stocker et larguer un objet cylindrique à partir d'un véhicule.**

(30) Priorité: **24.03.81  FR 8105804**

(43) Date de publication de la demande:
**29.09.82 Bulletin 82/39**

(45) Mention de la délivrance du brevet:
**23.07.86 Bulletin 86/30**

(84) Etats contractants désignés:
**DE GB IT NL**

(56) Documents cité:
**BE-A-563 098
FR-A-2 413 629
US-A-3 435 725**

(73) Titulaire: **Boulard, François, Villa Pascal Le Collet
du Pastre La Garonne, F-83220 Le Pradet (FR)**
Titulaire: **Milioti, Joseph, Avenue du Ponant Val
de l'Aspé, F-83700 Saint- Raphael (FR)**

(72) Inventeur: **Boulard, François, Villa Pascal Le
Collet du Pastre La Garonne, F-83220 Le Pradet
(FR)**
Inventeur: **Milioti, Joseph, Avenue du Ponant Val
de l'Aspé, F-83700 Saint- Raphael (FR)**

(74) Mandataire: **Chêne, Philippe, Délégation générale
pour l'armement Bureau des brevets et
inventions 14 rue St. Dominique, F-75997 Paris
Armées (FR)**

LIBER, STOCKHOLM 1986

## Description

La présente invention a pour objet un procédé et des dispositifs destinés au stockage puis au largage d'un objet cylindrique, par exemple au largage en mer d'une bouée cylindrique, a partir d'un aéronef ou d'un bateau.

Dans la suite de l'exposé, on se référera plus particulièrement au largage en mer de bouées d'écoute ou de mesure, ou de marqueurs fumigènes ou éclairants et, plus généralement, d'objets cylindriques ayant une masse de l'ordre de cinq à trente kilogrammes, une longueur de l'ordre de 30 à 100 cm et un diamètre de l'ordre de 10 cm. Ces objets peuvent également être des conteneurs cylindriques contenant des vivres, des médicaments ou des objets de premier secours qui doivent être lancés d'avion ou d'hélicoptère à des naufragés, à des alpinistes en difficulté ou à des populations isolées par la neige ou par un séisme.

On connaît à ce jour des aéronefs qui sont équipés de tubes de lancement dans chacun desquels on place avant le décollage de l'aéronef un objet cylindrique qui doit être largué en vol.

Les objets doivent être largués soit plusieurs à la fois, en des lieux bien déterminés, soit de façon échelonnée et les tubes de lancement comportent des moyens qui permettent à l'équipage de préparer le largage et de le commander à l'instant voulu.

Dans un autre domaine technique, on connaît le brevet BE-A-563098 qui décrit un procédé et un dispositif, respectivement, pour stocker et larguer un objet cylindrique, correspondant aux préambules des revendications 1 et 2. Ce brevet décrit un dispositif de secours pour stocker un canot pneumatique gonflable dans un conteneur cylindrique et gonfler ce canot après l'avoir évacué du conteneur sous la poussée due à la détente de gaz dans une vessie gonflable. Cette vessie gonflable logée à l'intérieur du conteneur n'a pas de fonction dans le stockage de l'objet à évacuer.

L'objectif de la présente invention est de procurer des moyens qui permettent de conditionner des objets à larguer pour un stockage de longue durée et qui permettent d'utiliser les conteneurs de stockage pour larguer l'objet qu'ils contiennent, avec une vitesse de lancement déterminée en intensité et en direction.

Cet objectif est atteint par un procédé pour stocker et larguer une bouée ou tout autre objet cylindrique analogue à partir d'un véhicule, selon lequel on place l'objet à larguer dans un conteneur cylindrique, dont le diamètre est légèrement supérieur à celui de cet objet et qui comporte un premier bouchon fixe qui en obture l'extrémité arrière, une vessie gonflable, et un bouchon éjectable qui comporte un dispositif de verrouillage et on actionne, au moment du largage, un mécanisme causant l'éjection du bouchon éjectable et de l'objet cylindrique sous la poussée due à la détente de gaz dans la vessie, procédé caractérisé en ce que: on gonfle légèrement la vessie en intercalant un disque de répartition entre cette vessie et l'objet et on peut garder l'objet contitionné dans le conteneur pendant un stockage de longue durée,
— au jour du largage, on gonfle la vessie à une pression comprise entre 2 bars et 10 bars, qui varie avec le véhicule de largage, et on place le conteneur sur l'un des postes de largage du véhicule qui est équipé d'un percuteur,
— et, au moment du largage, on actionne le percuteur qui vient frapper le dispositif de verrouillage du bouchon éjectable pour éjecter le bouchon éjectable et l'objet sous la poussée due à la détente de l'air comprimé contenu dans la vessie.

L'invention a également pour objet un dispositif pour, suivant le procédé de la revendication 1, stocker et larguer un objet cylindrique, notamment une bouée, à partir d'un véhicule, du type comportant un conteneur présentant un tube cylindrique dont le diamètre interne est légèrement supérieur au diamètre externe de l'objet et dont la longueur est supérieure à celle de cet objet, lequel tube est ouvert à ses deux extrémités axiales; un bouchon fixe qui obture l'extrémité arrière du tube et un bouchon éjectable qui est équipé d'un dispositif de verrouillage et qui obture l'extrémité avant du tube, le conteneur comportant

un compartiment destiné à recevoir l'objet et
une vessie gonflable, dispositif caractérisé en ce que

un disque de répartition est intercalé entre la vessie gonflable et l'objet cylindrique, la paroi interne du logement comportant un épaulement de manière à laisser passer l'objet cylindrique mais à arrêter le disque et la vessie.

De préférence, le dispositif de verrouillage du bouchon éjectable est du type comportant deux biellettes articulées entre elles et à leurs extrémités, qui forment une articulation à genouillère avant une position de blocage et la véhicule de largage comporte un percuteur qui permet de débloquer, par percussion, ladite genouillère, ce qui provoque le déverrouillage dudit bouchon avant et l'éjection dudit bouchon et dudit objet sous la poussée de l'air comprimé contenu dans la vessie.

L'invention a pour résultat de nouveaux conteneurs qui sont utilisables à la fois pour conditionner les bouées largables, ou tout autre objet cylindrique largable analogue, pendant un stockage qui peut être de longue durée et pour larguer ceux-ci, d'un avion, d'un hélicoptère ou d'un bateau avec une vitesse que l'on peut déterminer en choisissant la pression de gonflage de la vessie gonflable.

L'utilisation d'une vessie gonflable présente de nombreux avantages. Elle permet d'utiliser pendant le stockage une faible pression de gonflage qui est destinée seulement à maintenir la cohésion de l'ensemble placé à l'intérieur du conteneur et de gonfler la vessie à la pression voulue pour le largage pendant les préparatifs de celui-ci avant d'embarquer les conteneurs dans le véhicule de largage.

L'utilisation d'une vessie gonflable évite les risques de frottement ou de manque d'étanchéité qui risqueraient de se produire avec des conteneurs équipés d'un piston et d'une chambre remplie d'air comprimé et, de ce fait, un conteneur équipé d'une vessie gonflable permet d'obtenir au moment du largage une bonne reproductibilité des caractéristiques balistiques.

Les conteneurs selon l'invention qui sont équipés d'un bouchon arrière portant un dispositif de fixation qui coopère avec un dispositif complémentaire porté par le véhicule de largage permettent d'utiliser les conteneurs selon l'invention comme tubes de lancement. On peut également placer les conteneurs selon l'invention dans les tubes de lancement par gravité qui équipent certains véhicules de largage.

En équipant les conteneurs selon l'invention de bouchons avant et arrière portant des dispositifs de fixation complémentaires, on peut monter plusieurs conteneurs en alignement, ce qui permet d'accroître la capacité des véhicules de largage et de bénéficier des réductions de longueur des objets à larguer qui sont rendues possibles par la miniaturisation de plus en plus grande des composants de ceux-ci, notamment des composants électroniques.

La description suivante se réfère aux dessins annexés qui représentent, sans aucun caractère limitatif, des exemples de réalisation de conteneurs selon l'invention.

La figure 1 est une coupe axiale d'un conteneur selon l'invention.

La figure 2 est une coupe axiale d'un montage en cascade de deux conteneurs selon l'invention.

Les figures 3 et 4 sont respectivement une coupe axiale et une vue de face d'un premier mode de réalisation d'un dispositif de verrouillage du bouchon éjectable.

Les figures 5, 6 et 7 sont respectivement une vue en coupe axiale, en coupe transversale et une vue partielle en perspective d'un deuxième mode de réalisation d'un dispositif de verrouillage du bouchon éjectable.

La figure 8 est une coupe axiale de l'extrémité arrière d'un conteneur selon l'invention.

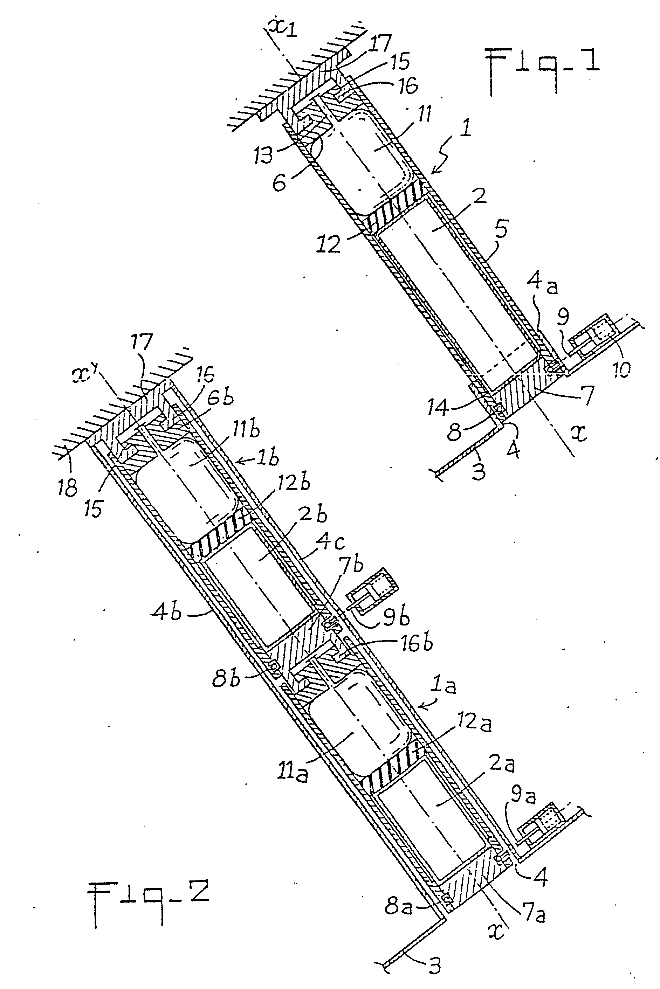

La figure 1 représente une coupe axiale d'un conteneur cylindrique 1, d'axe x x1, dans lequel est placeé un objet cylindrique 2 qui doit être largué d'un aéronef dont on a représenté une partie du fuselage 3 qui comporte un orifice de largage 4 en face duquel est disposé le conteneur 1.

L'inclinaison de l'axe x x1 par rapport à l'aéronef est déterminée pour que l'objet à larguer quitte l'aéronef avec une trajectoire de direction déterminée afin d'éviter qu'il ne risque de heurter l'aéronef.

Bien entendu, un aéronef de largage comporte une pluralité d'orifices de largage 4 en face de chacun desquels peut être place un conteneur 1 selon l'invention. Chaucun des orifices de largage 4 est équipé d'un dispositif de guidage du conteneur 1, qui est constitué par exemple d'un manchon 4a.

Le mot cylindrique est utilisé dans un sens général pour désigner tout volume délimité par des génératrices parallèles et il englobe des cylindres dont la section transversale n'est pas circulaire.

Les objets à larguer 2 sont par exemple des bouées d'écoute ou de mesure qui doivent être larguées en mer, ou des conteneurs contenant des secours tels que vivres, medicaments ou embarcation gonflable, des marqueurs lumineux ou fumigènes ou des balises acoustiques ou radio-électriques etc...

Le conteneur 1 comporte un tube cylindrique 5 dont le diamètre ou la section sont légèrement supérieurs à ceux de l'objet 2, de telle sorte que ce dernier peut coulisser librement à l'interieur du conteneur. Le tube 5 a une longueur supérieure à celle de l'objet 2, par exemple une longueur de l'ordre de 1,5 fois la longueur de l'objet 2. Le tube 5 est ouvert à ses deux extrémités axiales. L'extrémité arrière est obturée par un bouchon 6 qui est fixé au tube par exemple par vissage ou par tout autre moyen équivalent. L'extrémité avant est obturée par un bouchon 7 qui est un bouchon éjectable comportant un dispositif de verrouillage 8 qui est déverrouillé au moment du lancement par un percuteur 9 fixé à l'aéronef. Le percuteur 9 est actionné par exemple par un ressort 10 ou par un électro-aimant, ou par tout autre moyen équivalent. Plusieurs modes de réalisation du dispositif de verrouillage sont décrits ci-après.

Le tube 5 contient une vessie ou enveloppe gonflable 11, qui est située au contact du bouchon arrière, et un disque de répartition 12 qui est intercalé entre la vessie 11 et l'extrémité arrière de l'objet à larguer.

Le disque 12 est un disque en un matériau élastomère, par exemple en caoutchouc artificiel relativement dur. Il a pour fonciton de protéger la vessie gonflable 11 d'un contact direct avec la face arrière de l'objet 2 qui peut comporter des aspérités.

L'enveloppe 11 comporte une valve 13 qui traverse le bouchon arrière 6.

L'utilisation d'un conteneur selon l'invention est la suivante. Dans un premier temps, on place successivement dans le conteneur le disque 12, puis le bouchon arrière 6 portant la vessie 11 et la valve 12, puis l'objet à larguer 2 et enfin le bouchon 7 que l'on verrouille. On gonfle légèrement la vessie 11, de telle sorte que celle-ci maintienne l'objet 2 appliqué contre le bouchon avant. On peut ainsi assurer un stockage de longueur durée des objets à larguer 2 placés à l'intérieur du conteneur qui les protège efficacement de la poussière et des chocs.

Lorsque le jour du largage est arrivé, on gonfle les vessies 11 au moyen des valves 13 sous une pression qui est comprise entre 2 bars et 10 bars selon la vitesse d'ejection désirée, laquelle dépend de la vitesse de l'aéronef ou du bateau de largage. Les vessies 11 sont composées d'une mince enveloppe en élastomère pouvant subir sans se déchirer une augmentation de volume de l'ordre de cinq à sept fois.

Au moment du largage, l'éguipage de l'aéronef déclenche les percuteurs 9 qui viennent percuter les dispositifs de verrouillage 8 et qui provoquent la libération du bouchon 7. Le bouchon 7 et la charge 2 sont éjectés sous la poussée de l'air comprimé contenu dans la vessie 11. Grâce à sa grande déformabilité, la vessie 11 peut occuper, sans se déchirer, tout le volume intérieur du conteneur 5, de telle sorte qu'elle pousse la charge 2 pendant toute la progression de celle-ci à l'intérieur du tube 5.

La paroi du tube 5 comporte un petit épaulement interne 14 qui laisse passer la charge 2, mais qui arrête le disque 12 et la vessie 11, de sorte que ceux-ci peuvent être récupérés en même temps que le conteneur. De préférence, l'épaulement 14 est situé légèrement en retrait de l'extrémité avant de la charge 2 afin d'éviter qu'il ne risque d'accrocher celle-ci.

L'utilisation d'une vessie gonflable 11 présente des avantages par rapport à un conteneur analogue qui comporterait un piston poussant la charge 2 et, à l'arrière de celui-ci, une chambre qui serait remplie d'air comprimé. En effet, il faudrait alors utiliser un piston étanche à l'air et ceci poserait des problèmes d'etanchéïté du piston et de frottements de celui-ci dus aux différences de température que le conteneur peut avoir à supporter lorsque le largage a lieu à haute altitude.

On aurait pu également envisager de remplacer la vessie par un ressort précomprimé, mais ceci conduirait à une solution moins avantageuse. En effet, il faudrait utiliser un ressort très fort donc onéreux. De plus, il ne serait pas possible de modifier la poussée de ce ressort selon les vitesses d'éjection désirées alors qu'une telle modification est très facile à obtenir par un choix de la pression de gonflage de la vessie 11 approprié à chaque cas de lancement.

La figure 1 représente un exemple d'utilisation d'un conteneur selon l'invention utilisé comme tube de lancement. Dans ce cas, le bouchon arrière 6 comporte des créneaux 15 formant la partie mâle d'un accouplement à baïonnette ou analogue qui coopèrent avec des créneaux complémentaires 16, formant la partie femelle d'un support 17 qui est fixé au lanceur et qui permet d'orienter l'axe x x1 du conteneur dans une position bien détéminée par rapport au lanceur pour obtenir une direction déténinée de la vitesse de lancement. Bien entendu, le support 17 est fixé au lanceur en regard d'un orifice de lancement.

En variante, dans le cas où le véhicule de largage est déjà équipé de tubes de lancement fixes, on peut placer les conteneurs 1 selon l'invention dans ces tubes.

Selon une variante, le bouchon avant 7 peut également comporter, sur sa face externe, un embout d'assemblage femelle identique à l'embout 16 et, dans ce cas, il est possible de monter plusieurs conteneurs en cascade, les uns derrière les autres, et de les larguer l'un après l'autre.

La figure 2 représente un exemple d'un tel montage en cascade de deux conteneurs coaxiaux permettant de larguer successivement deux charges cylindriques 2a et 2b à travers un même orifice de largage 4 qui est équipé dans cet exemple de glissières de guidage 4b, 4c.

Le conteneur 1b est fixé, comme dans le cas de la figure 1, sur un support 17, comportant des créneaux d'assemblage 16, qui est fixé à la structure 18 du lanceur.

Le bouchon avant 7b du conteneur 1b comporte des créneaux d'assemblage 16b identiques aux créneaux 16, de sorte qu'un deuxième conteneur la comportant un bouchon arrière 6a identique au bouchon 6b peut être assemblé coaxialement sur les créneaux et ainsi de suite. Bien entendu, dans ce cas, le véhicule de largage doit comporter plusieurs percuteurs 9a, 9b échelonnés le long des conteneurs pour commander les largages successifs.

Un tel montage en cascade présente l'avantage de permettre de larguer successivement, par un même orifice de largage, plusieurs charges. Il permet d'accroître la capacité de lancement d'un même véhicule et de bénéficier pleinement de la réduction de longueur des charges 2 qui est rendue possible par la miniaturisation de plus en plus poussée des composants de celles-ci, notamment des composants électroniques.

La figure 3 est une coupe axiale à plus grande échelle de l'extrémité avant d'un conteneur selon l'invention.

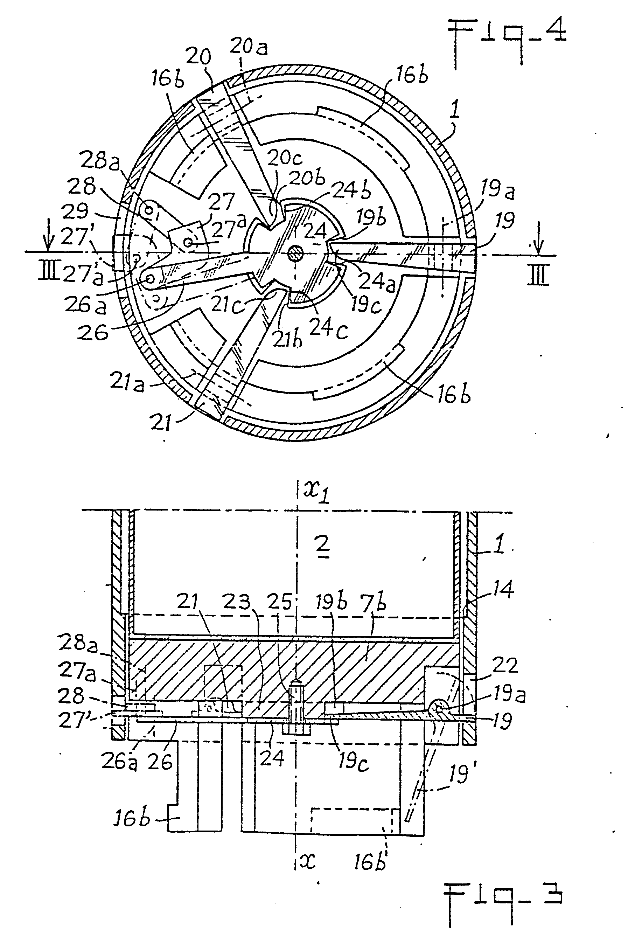

La figure 4 est une vue de dessous de la figure 3.

Les figures 3 et 4 représentent l'extrémité avant d'un conteneur 1 qui est équipée d'un bouchon éjectable 7b permettant de fixer un deuxième conteneur en cascade sur ce bouchon, comme le représente la figure 2.

Le bouchon 7b représenté sur les figures 3 et 4, comporte des prolongements vers l'extérieur 16b qui forment des tenons mâles en forme de créneaux qui sont destinés à coopérer avec les tenons 17 du bouchon arrière d'un autre conteneur. La disposition des tenons de cet assemblage à baïonnette est telle que les deux conteneurs ne peuvent être assemblés que dans une seule position afin que les gâchettes de déclenchement des dispositifs de verrouillage soient alignées.

Les figures 3 et 4 représentent un premier mode de réalisation d'un dispositif de verrouillage du bouchon éjectable.

Ce dispositif comporte plusieurs leviers, par exemple trois leviers 19, 20 et 21 disposés à 120° l'un de l'autre. Chaque levier est articulé autour d'un axe, respectivement 19a, 20a et 21a, situé à proximité de la périphérie.

Le petit bras de chaque levier, situé vers l'extérieur, est engagé dans une fente 22 découpée dans la paroi du conteneur 1.

En position verrouillée, l'extrémité du grand bras de chaque levier est engagée dans une encoche respectivement 19b, 20b et 21b. Les trois encoches 19b, 20b et 21b sont découpées radialement dans un bossage central 23 qui prolonge vers l'extérieur le corps du bouchon. A l'extérieur de ce bossage 23 est situé un disque rotatif 24 qui peut pivoter autour d'un axe central 25. Ce disque porte également trois encoches 24a, 24b et 24c qui se superposent aux encoches 19b, 20b et 21b lorsque le dispositif est déverrouillé.

Le disque 24 est solidaire d'un bras 26 dont l'extrémité libre est articulée en 26a sur un système de blocage à genouillère ou à compas qui comporte deux biellettes mobiles 27 et 28. La biellette 28 est articulée en 28a sur le bouchon et en 27a sur la biellette intermédiaire 27 qui est elle-même articulée en 26a sur le bras 26.

On a représenté en traits pleins sur la figure 4 l'articulation à genouillère en position débloquée et en traits pointillés la position bloquée, dans laquelle l'articulation 27a est passée à la position 27a' qui est située à l'extérieur de l'alignement des deux axes 28a et 26a. On voit dans cette position la biellette 27 occupe une position 27' qui se présente en regard d'une fenêtre 29 découpée dans la paroi du conteneur. Lorsque l'articulation à genouillère se trouve dans la position en pointellés, le bras 26 et le disque 24 ont pivoté légèrement, de telle sorte que le disque 24 obture les encoches 19b, 20b et 21b dans lesquelles les grands bras des trois leviers sont engagés et maintenus prisonniers.

Le fonctionnement est le suivant.

Avant le largage de la bouée 2, la pression de l'air dans la vessie 11 pousse celle-ci contre le bouchon 7b et les leviers 19, 20 et 21, qui sont engagés dans les fentes 22 et qui ne peuvent pas pivoter, verrouillent le bouchon.

Le disque 24 et le bras 26 ne peuvent pivoter dans le sens qui libèrerait les leviers, car l'articulation à genouillère est bloquée. La biellette 27 occupe la position 27' qui effleure la paroi du conteneur.

Pour larguer la bouée 2, on déclenche le percuteur 9 qui vient frapper la biellette 27 et qui débloque la genouillère. Chaque levier 19, 20 et 21 porte, à l'extrémité du grand bras, une plage inclinée 19c, 20c, 21c formant une rampe qui tend à faire pivoter le disque 24 sous l'action de la poussée de la vessie, dans le sens de fermeture du compas formé par les pièces 27 et 28, ce qui place les encoches 24a, 24b et 24c au-dessus des encoches 19b, 20b et 21b et libère les leviers 19, 20 et 21. Ceux-ci pivotent pour occuper une position telle que 19' représentée sur la figure 3 et le bouchon 7b est éjecté en même temps que la bouée 2.

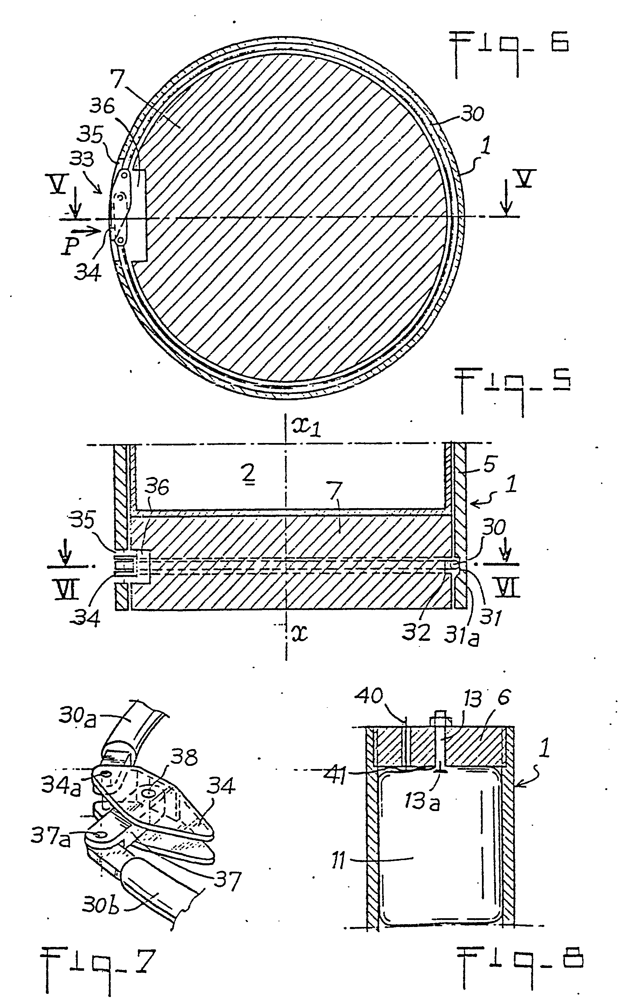

Les figures 5 et 6 représentent, en coupe axiale et transversale, un autre mode de réalisation d'un bouchon avant 7 éjectable. Pour la clarté du dessin, on n'a pas représenté sur ces figures un bouchon équipé d'un dispositif d'assemblage à baïonnette 16b comme dans le cas figures 3 et 4, mais bien entendu, le bouchon selon les figures 5 et 6 pourrait être équipé d'un tel dispositif.

Dans ce deuxième mode de réalisation, le bouchon 7 est verrouillé par un jonc ou un anneau élastique 30 qui est placé dans une gorge 31 creusée à la périphérie interne de l'extrémité avant du tube 5 et dans une gorge 32 creusée à la périphérie du bouchon 7. La gorge 32 a une profondeur supérieure au diamètre du jonc 30, de sorte que celui-ci peut se loger entièrement dans la gorge 32. Le jonc 30 est précontraint, de telle sorte qu'il a tendance, sous l'effet des forces élastiques, à se refermer et à rentrer dans la gorge 32. Le jonc 30 est ouvert et ses deux extrémités sont reliées entre elles par un dispositif 33 de verrouillage du type à genouillère ou à compas. La gorge 31 comporte un flanc externe 31a incliné qui facilite la fermeture de l'anneau élastique 30.

Les figures 5 et 6 représentent le dispositif 33 en position de verrouillage, dans laquelle le jonc 30 est maintenu ouvert et engagé en partie dans la gorge 31, de sorte que le bouchon 7 ne peut pas être éjecté. Comme on peut le voir sur les figures 5 et 6, le dispositif de verrouillage comporte une pièce intermédiaire 34 qui affleure la paroi externe du conteneur, en position verrouillée, à travers une fenêtre 35 de ladite paroi.

Pour déverrouiller, le percuteur 9 vient frapper sur la pièce 34 dans la direction de la flèche P, ce qui provoque le déblocage du dispositif à genouillère qui vient se loger dans un logement 36, ménagé dans le bouchon 7.

La figure 7 représente une vue en perspective du dispositif de verrouillage des figures 5 et 6. On voit sur cette figure les deux extrémités 30a et 30b du jonc 30. L'extrémité 30a est articulée autour d'un axe 34a sur une biellette 34 en forme de chape ou d'étrier. L'extrémité 30b est articulée autour d'un axe 37a sur une deuxième biellette intermédiaire 37 qui est elle-même articulée autour d'un axe 38 sur la pièce 34. Les deux biellettes 34, 37 forment un compas dont l'articulation 38 est le sommet. Si l'on place l'articulation 38 à l'extérieur de l'alignement défini par les axes 36a et 37a, les forces élastiques exercées par le jonc 30 ne peuvent refermer ce compas qui reste bloqué tant que le percuteur n'a pas repoussé la pièce 34 vers l'intérieur.

Dans le mode de réalisation selon les figures 5 à 7, au moment du largage, le jonc 30 est logé à l'intérieur de la gorge 32 du bouchon et il est éjecté en même temps que le bouchon.

En variante, on peut utiliser un jonc élastique qui tend à s'ouvrir, ce qui oblige à épaissir la paroi du tube 5 pour pouvoir y loger une gorge suffisamment profonde pour contenir le jonc. Dans ce cas, au moment du largage, le jonc reste dans la gorge du conteneur et il peut être réutilisé.

La figure 8 représente une coupe axiale à plus grande échelle de l'extrémité arrière du conteneur 1. On voit sur cette coupe le bouchon fixe 6, qui est un bouchon fileté et la vessie 11 qui comporte une valve de gonflage 13 qui traverse le bouchon et qui est munie d'un clapet 13a. On a également représenté sur la figure 8 un dispositif capteur de pression qui est composé d'une tige 40 qui traverse le bouchon et qui s'appuie contre une lame de ressort 41 fixée à la face interne du bouchon. Lorsque la vessie 11 est normalement gonflée, elle écrase le ressort 41 et la tige 40 fait saillie à l'extérieur du bouchon où elle actionne un contact indiquant un gonflement normal.

En cas de manque de pression qui pourrait entraîner des accidents lors du largage, la tige 40 ouvre le contact ce qui actionne une alarme ou une interdiction de largage.

**Revendications**

1. Procédé pour stocker et larguer une bouée ou tout autre objet cylindrique (2) analogue à partir d'un vehicule, selon lequel on place l'objet à larguer dans un conteneur cylindrique (1), dont le diamètre est légèrement supérieur à celui de cet objet et qui comporte un premier bouchon fixe (6) qui en obture l'extrémité arriere, une vessie gonflable (11), et un bouchon éjectable (7) qui comporte un dispositif de verrouillage (8), et on actionne, au moment du largage, un mécanisme causant l'éjection du bouchon éjectable (7) et de l'objet cylindrique sous la poussée due à la détente de gaz dans la vessie, procédé caractérisé en ce que: on gonfle légèrement la vessie (11) en intercalant un disque de répartition (12) entre cette vessie et l'objet et on peut garder l'objet conditionné dans le conteneur pendant un stockage de longue durée,
— au jour du largage, on gonfle la vessie (11) à une pression comprise entre 2 bars et 10 bars, qui varie avec le véhicule de largage, et on place le conteneur (1) sur l'un des postes de largage du véhicule qui est équipé d'un percuteur (9),
— et, au moment du largage, on actionne le percuteur (9) qui vient frapper le dispositif de verrouillage (8) du bouchon éjectable (7) pour éjecter le bouchon éjectable et l'objet sous la poussée due à la détente de l'air comprimé contenu dans la vessie.

2. Dispositif pour, suivant le procédé de la revendication 1, stocker et larguer un objet cylindrique (2), notamment une bouée, à partir d'un véhicule, du type comportant un conteneur (1) présentant un tube cylindrique (5) dont le diamètre interne est légèrement supérieur au diamètre externe de l'objet et dont la longueur est supérieure à celle de cet objet, lequel tube est ouvert à ses deux extrémités axiales; un bouchon fixe (6) qui obture l'extrémité arrière du tube et un bouchon éjectable (7) qui est équipé d'un dispositif de verrouillage (8) et qui obture l'extrémité avant du tube le conteneur comportant, en combinaison: un compartiment destiné à recevoir l'objet (2) et une vessie gonflable (11), dispositif caractérisé en ce qui un disque de répartition (12) est intercalé entre la vessie gonflable et l'objet cylindrique (2), la paroi interne du logement comportant un épaulement de manière à laisser passer l'objet cylindrique (2) mais à arrêter le disque (12) et la vessie (11).

3. Dispositif selon la revendication 2, caractérisé en ce que le dispositif de verrouillage (8) du bouchon éjectable (7) est du type comportant deux biellettes (27, 28 ou 34, 37) articulées entre elles et à leurs extrémités, qui forment une articulation à genouillère ayant une position de blocage et le véhicule de largage comporte un percuteur (9, 10) qui permet de débloquer, par percussion, ladite genouillère, ce qui provoque le déverrouillage dudit bouchon avant (7) et l'éjection dudit bouchon (7) et dudit objet (2) sous la poussée de l'air comprimé contenu dans la vessie.

4. Dispositif selon la revendication 3, caractérisé en ce que ledit dispositif de verrouillage (8) comporte plusieurs leviers radiaux (19, 20, 21), lesquels leviers sont articulés à la face externe dudit bouchon éjectable (7b), chacun autour d'un axe (19a, 20a, 21a) et le petit bras de ces leviers est engagé dans une ouverture (22) de la paroi dudit tube (5) tandis que l'extrémité du grand bras est engagée dans une encoche (19b, 20b, 21b), découpée dans un bossage (23) dudit bouchon et ledit dispositif comporte, en outre, un disque rotatif (24) qui est muni d'encoches (24a, 24b, 24c) superposables aux encoches dudit bossage et qui comporte un bras radial (26) et l'extrémité libre dudit bras radial comporte une articulation (26a) sur une pièce intermédiaire (27) d'un dispositif à genouillère, laquelle pièce 27 comporte une articulation (27a) sur une biellette (28) qui est articulée (28a) sur la face externe dudit bouchon et ledit tube (5) comporte une fenêtre (29) dans laquelle ladite pièce intermédiaire (27) se présente lorsque ledit dispositif à genouillère est bloqué.

5. Dispositif selon la revendication 4, caractérisé en ce que les extrémités des grands bras desdits leviers (19, 20, 21) comportent chacune une plage inclinée (19c, 20c, 21c) qui forme une rampe qui tend à faire tourner ledit disque (24) dans le sens du déverrouillage.

6. Dispositif selon la revendication 3, caractérisé en ce que ledit dispositif de verrouillage (8) comporte un jonc élastique (30) qui est logé entre deux gorges (31, 32) se faisant face, qui sont découpées respectivement dans la paroi interne dudit tube (5) et sur la face externe dudit bouchon éjectable (7), et ledit jonc est interrompu et chacune de ses deux extrémités (30a, 30b) comporte une articulation (34a, 37a) sur deux biellettes (34, 37) qui sont articulées entre elles (38) et qui forment un compas qui est bloqué lorsque l'articulation centrale (38) passe à l'extérieur de l'alignement des deux autres articulations (34a, 37a) et le tube (5) comporte une fenêtre (35) dans laquelle l'une desdites biellettes (34) se présente lorsque le compas est bloqué.

7. Dispositif selon la revendication 6, caractérisé en ce que ledit jonc (30) est précontraint et a tendance à se refermer, que la gorge (32) du bouchon (7) a une profundeur supérieure au diamètre dudit jonc (30), de telle sorte que le jonc peut se loger dans ladite gorge (32) et le bouchon comporte un logement en creux (36) dans lequel lesdites biellettes (34, 37) se logement lorsque ledit compas est replié.

8. Dispositif selon l'une quelconque des revendications 2 à 7, caractérisé en ce que ladite vessie gonflable (11) comporte une valve (13) qui traverse ledit bouchon arrière (6).

9. Dispositif selon l'une quelconque des revendications 2 à 8, caractérisé en ce que ledit bouchon arrière (6) est prolongé vers l'arrière par un dispositif de fixation (15) du type à baïonnette ou à créneaux qui coopère avec un dispositif de fixation complémentaire (16) porté par un support (17), fixé au véhicule de largage.

10. Dispositif selon la revendication 9, caractérisé en ce que le bouchon éjectable (7b) est prolongé vers l'avant par un dispositif de fixation (16b) du même type que ledit dispositif (16), de telle sorte que plusieurs conteneurs peuvent être montés en cascade.

11. Dispositif selon l'ujne quelconque des revendications 2 à 10, caractérisé en ce qu'il comporte un capteur de pression (40, 41) qui mesure la pression de gonflage de la vessie et qui actionne une alarme ou une interdiction de largage en cas de chûte de pression.

**Patentansprüche**

1. — Verfahren zur Lagerung und zum Auswerfen einer Boje oder eines ähnlichen zylindrischen Gegenstandes (2) aus einem Fahrzeug, nach dem der auszuwerfende Gegenstand in einem zylindrischen Behälter aufbewahrt ist, dessen Durchmesser etwas grösser als der jenige des Gegenstandes ist und der mit einem ersten festen Verschluß (6) zur Abdichtung des hinteren Endes, einer aufblasbaren Gummiblase (11) und einem auswefbaren, mit einer Verriegelungsvorrichtung (8) versehenen Stopfen (7) bestückt ist, wobei beim Auswerfen eine Vorrichtung zum Ausstoßen des Stopfens (7) und des zylindrischen Gegenstandes unter dem Druck der entspannenden Gase in der Blase betätigt wird, Verfahren dadurch gekennzeichnet, daß die Blase (11) mit Einlage einer Druckausgleichscheibe (12) zwischen Blase und Gegenstand leicht aufgeblasen wird, wobei das Gegenstand somit für längere Zeit aufbewahrt werden kann, und

— daß, am Anwendungstag, die Blase (11) mit einem Druck zwischen 2 und 10 bar, je nach Gegebenheiten des auswerfenden Fahrzeuges, beaufschlagt wird und daß der Behälter (1) auf einer, mit einem Schlagbolzen (9) versehenen Abwurfstation des Fahrzeuges angebracht wird, und
— daß beim Auswurfvorgang, der betätigte Sclagbolzen (9) auf die Verriegelungsvorrichtung (8) des ausverfbaren Stopfens (7) schlägt und somit das Ausstoßen des auswerfbaren Stopfens und des Gegenstandes unter dem Druck der in der Blase enthaltenen und entspannenden Gase bewirkt.

2. — Vorrichtung nach Anspruch 1 zur Lagerung und zum Auswerfen eines zylindrischen Gegenstandes (2), nämlich einer Boje, aus einem Fahrzeug, des Types mit einem Behälter (1) bestehend aus einem zylindrischen Rohr (5), dessen Durchmesser etwas grösser als der jenige des Gegenstandes ist und dessen Länge grösser als die jenige des Gegenstandes ist, wobei das Rohr an dessen beiden Enden offen ist, aus einem festen Stopfen (6), der das hintere Ende de Rohres verschließt, und einem auswerfbaren Stopfen (7), der mit einer Verriegelungsvorrichtung (8) versehen ist und das vordere Ende verschließt, wobei der Behälter eine aus einem Fach zur Aufnahme de Gegenstandes (2) und einer aufblasbaren Blase bestehende Anordnung aufweist, Vorrichtung dadurch gekennzeichnet, daß eine Druckausgleichscheibe (12) zwischen der aufblasbaren Blase und dem zylindrischen Gegenstand (2) eingfügt wird, wobei die innere Wandung der somit erhaltenen Aufnahme mit einem Ansatz versehen ist, der das zylindrische Gegenstand (2) durchläßt, jedoch die Scheibe (12) und die Blase (11) zurückhält.

3. — Vorrichtung nach Anspruch 2, dadurch gekennzeichnet, daß die Verriegelungsvorrichtung (8) des auswerfbaren Stopfens (7) aus zwei Gliedern (27, 28 oder 34, 37) besteht, die untereinander an einem Ende gelenkig verbunden sind und somit eine Kniehebelvorrichtung mit einer Verriegelungslage bilden, und daß das auswerfende Fahrzeug mit einem Schlagbolzen (9, 10) versehen ist, der durch Aufschlag die Kniehebelvorrichtung löst und somit die Entriegelung des vorderen Stopfens (7) sowie das Auswerfen des erwähnten Stopfens (7) und des erwähnten Gegenstandes (2) unter dem Druck der in der Blase enthaltenen Druckluft bewirkt.

4. — Vorrichtung nach Anspruch 3, dadurch gekennzeichnet, daß die erwähnte Verriegelungsvorrichtung (8) aus mehreren radialen Hebeln (19, 20, 21) besteht, die an der äusseren Seite des auswerfbaren Stopfens (7b) je um eine Achse (19a, 20a, 21a) gelagert sind, wobei der kleine Hebelarm in eine Oeffnung (22) des Rohres (5) und der grosse Hebelarm in eine Aussparung (19b, 20b, 21b) eines auf dem Stopfen vorgesechenen Vorsprunges (23) eingreift, und daß die erwähnte Vorrichtung ausserdem aus einer drehenden Scheibe (24) besteht, deren Aussparungen (24a, 24b, 24c) den Aussparungen des Vorsprunges überlagert werden können und die einen radialen Hebelarm (26) aufweist, dessen freien Ende mit einer Achse (26a) versehen ist, die in einem Zwischenstück (27) einer Kniehebelvorrichtung gelagert ist, wobei das Stück 27 über ein Gelenk (27a) mit dem über die Achse (28a) auf der äusseren Seite des Stopfens gelagerten Schwingarm (28) verbunden ist, und daß das Rohr (5) mit einer Aussparung (29) versehen ist, in der das Zwischenstück (27), in verriegelter Lage der Kniehebelvorrichtung, einragt.

5. — Vorrichtung nach Anspruch 4, dadurch gekennzeichnet, daß die Ende der grossen Hebelarme (19, 20, 21) je mit einer einfallenden Fläche (19c, 20c, 21c) versehen sind, um eine R ampe zu bilden, die dazu neigt, die Scheibe (24) in Entriegelungsrichtung zu drehen.

6. — Vorrichtung nach Anspruch 3, dadurch gekennzeichnet, daß die Verriegelungsvorrichtung (8) einen Federring (30) enthält, der in zwei gegenüberliegende Nuten (31, 32) eingreift, die in der inneren Wandung des Rohres (5) bzw. in der zylindrischen Aussenfläche des auswerfbaren Stopfens (7) gefräst worden sind, wobei der Federring aufgeschnitten und an jedem Ende (30a, 30b) mit einem Gelenk (34a, 37a) versehen ist, und daß diese Gelenke auf zwei Schwingarme greifen, die wiederum um die Achse (38) eine Schere bilden, bei welcher die Gelenkachse (38) in verriegeltem Zustand nach aussen gegenüber der Linie (34a, 37a) gedrückt wird, und daß das Rohr (5) mit einer Aussprung (35) versehen ist, in der der Schwingarm (34), in verriegelter Lage der Schere, einragt.

7. — Vorrichtung nach Anspruch 6, dadurch gekennzeichnet, daß der Federring (30) unter Vorspannung steht und dazu neigt sich zusammen zu ziehen, daß die Nut (32) des Stopfens (7) tiefer als der Durchmesser des Federringes (30) gefräst worden ist, damit sich der Federring in die Nut (32) einfügen kann, und daß der Stopfen mit einer Aussparung versehen ist, in der die Schwingarme (34, 37) aufgenommen werden, wenn die Schere zusammengeklappt wird.

8. — Vorrichtung nach einem beliebigen Anspruch 2 bis 7, dadurch gekennzeichnet, daß die aufblasbare Blase (11) mit einem Ventil (13) versehen ist, das den hinteren Stopfen (6) durchdringt.

9. — Vorrichtung nach einem beliebigen Anspruch 2 bis 8, dadurch gekennzeichnet, daß der hintere Stopfen (6) nach hinten mit einer Bajonett-Befestigungsvorrichtung (15) versehen ist, die mit einer auf einer Halterung (17) des auswerfenden Fahrzeuges angebrachten, ergänzenden Befestigungsvorrichtung (16) mitwirkt.

10. — Vorrichtung nach Anspruch 9, dadurch gekennzeichnet, daß der auswerfbare Stopfen (7b) gegen vorne mit einer Befestigungsvorrichtung (16b) des gleichen Types wie die Vorrichtung (16) versehen ist, damit mehrere Behälter in Längsrichtung aneinander gekoppelt werden können.

11. — Vorrichtung nach einem beliebigen Anspruch 2 bis 10, dadurch gekennzeichnet, daß sie mit einem Druckgeber (40, 41) versehen ist, die den Aufblasdruck der Blase mißt und bei unzulänglichem Betriebsdruck ein Warnsignal auslöst oder den Auswurf des Gegenstandes verhindert.

**Claims**

1. Process in view of storing and releasing of buoy (2) or any other similar cylindrical object from a vehicle, in which said object to be released is placed in a cylindrical container (1) whose diameter is slightly greater than that of rear end, an inflatable bladder (11), and an ejectable cap (7) with a locking system (8), and is actuated, at the moment of releasing, a device causiring ejection of said ejectable cap (7).

Process characterized in that:
— the bladder (11) is slightly inflated by interposing a distribution disc (12) between said bladder and object, and said object can be kept packed in the container for a long period of storage;
— on the day of release, the bladder (11) is inflated to a pressure of between 2 and 10 bar, which varies with the releasing vehicle, and the container (1) is place on one of release points of said vehicle which is equipped with firing pin (9).
— and, at the moment of releasing, said pin (9) is actuated and strikes the locking device (8) of the ejectable cap (7) and said ejectable cap and object are ejected by the thrust due to the expansion of the compressed air contained in the bladder.

2. Device for storing and releasing a cylindrical object (2), notably a buoy, from a vehicle, comprising a container (1) comprising:
— a cylindrical tube (5) whose internal diameter is slightly higher than the external diameter of the object whose length is greater than that of the said object, the which tube is open at both ends, a fixed cap (6) off the rear end of said tube,
— and an ejectable cap (7) equipped with a locking device (8) and blanking off the front end of the tube, said container comprising in combinaison, a compartment designed to housing said object (2) and an inflatable bladder (11), characterized by the fact that a distribution cylindrical disc (12) is interposing between said inflatable bladder and object, the internal wall of housing comprising a shouldering letting though cylindrical object but stopping said disc (12) and said bladder (11).

3. A device according to claim 2, characterized by the fact that the said locking device (8) of ejectable cap (7) is of a type consisting of two link rods (27, 28 or 34, 37) hinged together and that their ends, forming a knuckle-joint with a locking position and the releasing vehicle has a firing pin (9, 10) which unlocks the said knuckel-joint by percussion, which unlocks the front cap (7) and ejects the said cap (7) and object (2) under the thrust of the compressed air contained in the bladder.

4. Device according to claim 3, characterized by the fact that the said locking device (8) contains several radial levers (19, 20, 21) the which levers are hinged on the outer face of the said ejectable cap (7b), each around a pin (19a, 20a, 21a) and the short arm of these levers inserts into an opening (22) of the wall of the tube (5) whereas the end of the long arm inserts into a notch (19b, 20b, 21b) cut out of a boss (23) in the said cap and the device also contains rotary disc (24) containing notches (24a, 24b, 24c) superposable on the notches of boss and which contains a raidal arm (26) and the free end of the said radial arm contains a hinge (26a) on an intermediate part (27) of a knuckle-joint device, the which part 27 has a hinge (27a) on a link rod (28) which is hinged (28a) to the outer face of the said cap and the said tube (5) contains a window (29) in which the intermediate part (27) inserts when the said knuckle-joint device is locked.

5. Device according to claim 4, characterized by the fact that the ends of the long arms of the said levers (19, 20, 21) each have an inclined section (19c, 20c, 21c) which forms a ramp tending to turn the said disc (24) in the unlocking direction.

6. Device according to claim 3, characterized by the fact that the said locking device (8) contains a spring ring (30) housed between two grooves (31, 32) opposite each other, cut out respectively in the internal wall of tube (5) and on the external wall of the ejectable cap (7), the said ring is broken and each of its ends (30a, 30b) has a hinge (34a, 37a) on two link rods (34, 37) which are hinged together (38) forming a compass which is locked when the central hinge (38) goes outside the alignment of the two other hinges (34a, 37a) and tube (5) contains a window (35) in which one of the said link rods (34) inserts when the compass is locked.

7. Device according to claim 6, characterized by the fact that the ring (30) is prestressed and tends to reclose, the groove (32) of plug (7) is deeper than the diameter of the said ring (30) so that the ring can be housed in the said groove (32) and the cap contains a hollow housing (36) in which the said link rods (34, 37) are housed when the compass is folded.

8. Device according to one of claims 2 to 7, characterized by the fact that the said inflatable bladder (7) contains a valve (13) crossing the rear cap (6).

9. Device according to one of claims 2 to 8, characterized by the fact that the said rear cap (6) is prolonged to the rear by a bayonet or slots type securing device (15) cooperating with a complementary securing device (16), carried by a support (17), secured to the releasing vehicle.

10. Device according to claim 9, characterized by the fact that the ejectable cap (7b) is prolonged forwards by a securing device (16b) of the same type as device (16), so that several containers can be mounted cascadewise.

11. Device according to one of claims 2 to 10, characterized by the fact it contains a pressure pickup (40, 41) measuring the inflation pressure of the bladder and actuating an alarm or prohibiting release if the pressure drops.

Fig-1

Fig-2

Fig-4

Fig-3

Fig. 6

Fig. 5

Fig. 7

Fig. 8